# FASCICULE DE BREVET EUROPEEN

(11) **EP 1 272 076 B1**
(45) Date de publication et mention de la délivrance du brevet: **11.05.2005**
(21) Numéro de dépôt: 01923788.2
(22) Date de dépôt: 10.04.2001
(51) Int. Cl.: A47J 37/08

(54) **TOIT PERFECTIONNE POUR GRILLE-PAIN**
AUFSATZ FÜR EINEN BROTRÖSTER
IMPROVED TOP FOR TOASTER

(30) Priorité: 13.04.2000 FR 0004862
(43) Date de publication de la demande: 08.01.2003
(73) Titulaire: SEB S.A., 69130 Ecully (FR)
(72) Inventeur: MAUFFREY, Guy, F-70280 Breuchotte (FR); MARX, Dominique, F-88000 Epinal (FR)
(74) Mandataire: Kiehl, Hubert
(86) Numéro de dépôt international: PCT/FR2001/001100
(87) Numéro de publication internationale: WO 2001/078567

(56) Documents cités:
- EP-A- 0 283 641
- DE-A- 2 749 919
- DE-U- 7 519 167

## Description

La présente invention se rapporte au domaine technique des appareils électroménagers de cuisson du type grille-pain et concerne plus particulièrement la partie supérieure dudit grille-pain fermant la chambre de chauffe et permettant, dans certains cas, le réchauffage d'aliments tels des petits pains ou viennoiseries pour ledit grille-pain.

Le présent document traite d'un perfectionnement des toits pour grille-pain décrits et développés notamment dans le document FR 99 12257 traitant particulièrement des toits réchauffeurs. Outre les avantages déjà décrits dans ce document, la présente invention traite plus particulièrement de la réduction de la température présentée par le toit du grille-pain en sa périphérie. En effet, notamment lorsque le toit est métallique, la température relevée sur le pourtour périphérique est suffisamment élevée pour contraindre à éloigner les parois du grille-pain de ce pourtour, générant ainsi un espace périphérique entre le boîtier et le toit.

Cet espace doit souvent être maintenu par des espaceurs afin d'éviter un éventuel contact entre le toit et le boîtier. En effet, la relative souplesse du boîtier, réalisé le plus souvent en plastique, permet de plaquer le boîtier contre le toit lorsqu'on le saisit, ce qui peut amener localement des problèmes de marques sombres de brûlage, ou un ramollissement, voire une fusion locale du plastique.

Le but de la présente invention est de remédier aux problèmes présentés par l'art antérieur en proposant un grille-pain comportant un bâti agencé dans un boîtier, au moins une chambre de grillage verticale ouverte dans la partie supérieure du boîtier, des moyens de chauffe situés à proximité de la chambre de grillage, un toit constitué d'une tôle périphérique à l'ouverture de la chambre de grillage et possédant un rebord supérieur, ledit toit comportant également une collerette en périphérie, caractérisé en ce que la collerette est maintenue à la tôle par des ponts de matière.

Par ponts de matière, on entend une zone longue et étroite, de manière à assurer la tenue mécanique de la collerette, mais limitant grandement le transfert thermique par conduction du centre du toit vers la périphérie de la collerette.

Cette configuration permet, par la température suffisamment basse présentée par la collerette du toit, soit d'éviter des espaceurs tels que précédemment décrits, entre le toit et le boîtier, soit de rapprocher le toit du boîtier jusqu'à supprimer l'espace annulaire les séparant, la collerette périphérique étant alors en contact avec le boîtier du grille-pain. Cette dernière solution présente l'avantage de rigidifier les parois du grille-pain sans inconvénient et sans pièce supplémentaire. Par cette rigidification, les parois du boîtier du grille-pain peuvent être amincies, réduisant la quantité de matière et donc les coûts.

Dans une configuration particulière de l'invention, la collerette périphérique inférieure du toit est localisée à l'intérieur du boîtier du grille-pain. Ceci évite de laisser saillant le bord périphérique du toit, réduisant le travail de finition afin d'éliminer les risques de blessure pour l'utilisateur.

Selon un mode de réalisation avantageux, la tôle est en liaison avec le boîtier du grille-pain, en étant par exemple posée sur le boîtier du grille-pain. En fixant le toit sur le dessus du grille-pain, la collerette prolonge alors le boîtier du grille-pain, supprimant ainsi l'espace annulaire, ce qui permet, en plus de rigidifier les parois du grille-pain, de mettre en valeur la fonction de réchauffage du toit, tout en réduisant les risques d'introduction de miettes ou d'objets dans le grille-pain. Pour assurer un meilleur maintien mécanique, la tôle peut être liée solidairement au boîtier du grille-pain.

Selon un mode particulier de l'invention, la collerette périphérique inférieure est inclinée d'un angle α par rapport à l'horizontale, cet angle étant au moins égal à 30°. Cette inclinaison permet d'orienter le flux de chaleur provenant de la face arrière du réflecteur vers les zones centrales, tout en protégeant thermiquement le boîtier.

Selon un mode particulier de réalisation de l'invention, au moins une partie du rebord de la tôle est surélevée par rapport à la partie supérieure du boîtier. Une telle disposition permet d'utiliser le toit en tant que réchauffeur d'aliments. Cette disposition évite que le pain ne repose directement sur le boîtier qui pourrait voir alors sa température localement s'élever, soit par la chaleur générée par le pain, mais surtout par le bouchage de l'ouverture de la chambre de chauffe. La plupart des boîtiers étant réalisés en plastique, une élévation anormale de température risquerait de le détériorer ou de laisser des marques de brûlage local.

Avantageusement, le rebord du toit possède des ouvertures permettant une répartition homogène de la chaleur

Selon une configuration avantageuse de ce mode de réalisation, le rebord de la tôle possède des bossages, de telle sorte à présenter des points d'appui à différentes hauteurs. Ces bossages permettent, soit de surélever au moins une partie du rebord de la tôle par rapport à la partie supérieure du boîtier, soit, lorsque le rebord est entièrement surélevé par rapport au boîtier, de délimiter des zones en creux pour un positionnement du pain plus facile. Par ailleurs, ces bossages peuvent être prévus pour ménager des passages d'air chaud sous le pain qui est ainsi réchauffé de manière plus homogène.

En complément ou en variante de la précédente configuration, les ouvertures dans le rebord de la tôle sont localisées au niveau des zones de positionnement du pain. L'air chaud ascendant peut ainsi s'échapper dans les parties creuses résultant du bossage, ce qui favorise une meilleure répartition de la chaleur dans les zones prévues pour accueillir le pain.

Avantageusement le rebord de la tôle présente une déclivité vers l'ouverture de la chambre de chauffe, permettant, d'une part de mieux asseoir les viennoiseries au-dessus de l'ouverture du grille-pain, et d'autre part d'éviter que le pain ne soit en contact direct avec les ouvertures de la tôle.

La présente invention sera mieux comprise à l'aide de la description qui va suivre, en référence aux figures annexées, données à titre d'exemple non limitatif, parmi lesquelles :
- la figure 1 est une vue en coupe partielle d'un grille-pain selon une première configuration, le toit étant représenté dans une vue entière,
- la figure 2 est une vue en coupe partielle d'un grille-pain selon une seconde configuration, le toit étant représenté dans une vue entière,
- la figure 3 est une vue en perspective d'un toit réchauffeur d'aliments pour grille-pain selon la présente invention,
- la figure 4 est une vue en coupe partielle d'une troisième configuration de l'invention.

L'exemple suivant traite d'un toit réchauffeur d'aliments pour grille-pain. La présente invention trouve également tout son intérêt dans les toits plus classiques de grille-pain, n'ayant pas la fonction de réchauffage, et équipant les grille-pain afin de fermer partiellement la chambre de chauffe pour en limiter l'accès et pour assurer la tenue du boîtier à l'aide d'entretoises isolantes ou, grâce à la présente invention, sans entretoise.

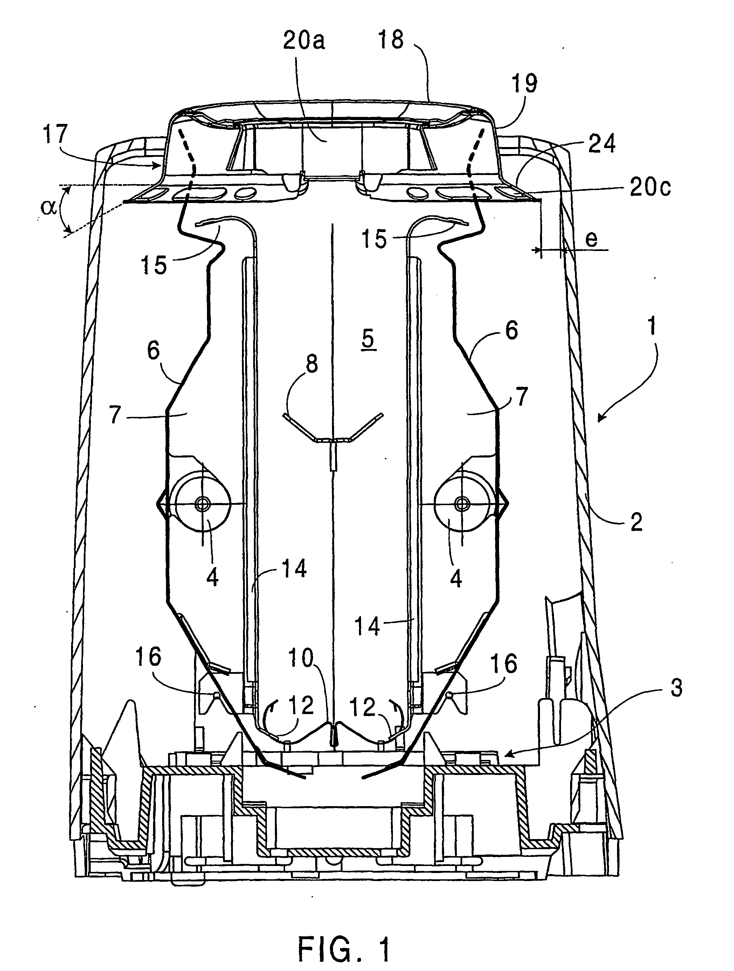

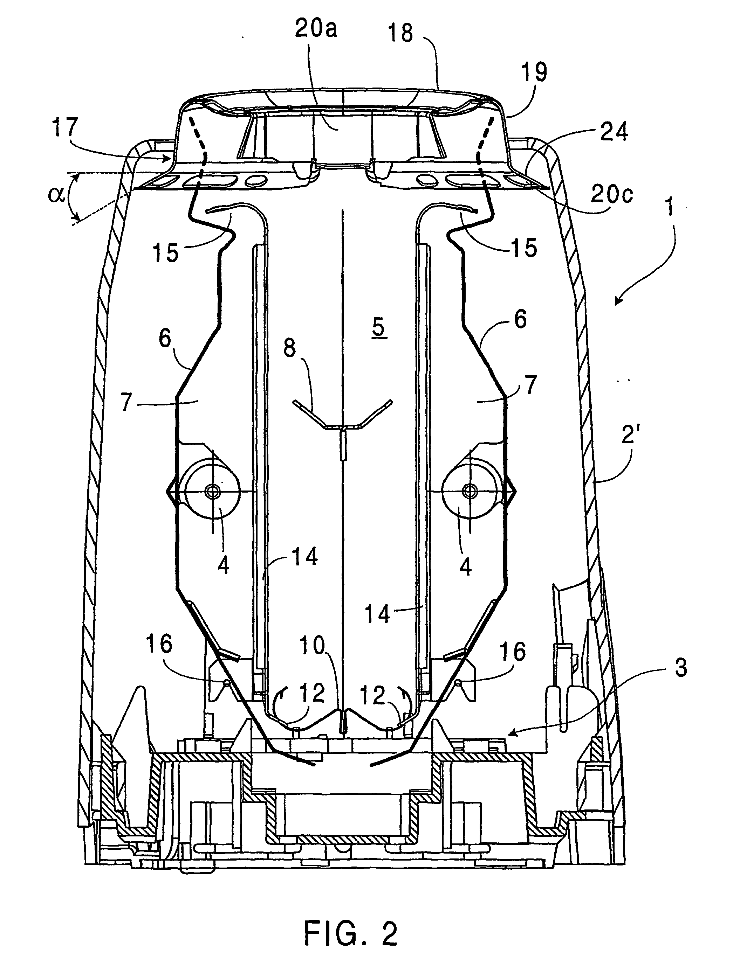

Comme il est bien visible aux figures 1 et 2, le grille-pain 1 selon la présente invention comporte un boîtier 2 possédant une ouverture supérieure et à l'intérieur duquel est agencé un bâti 3 composé notamment de deux réflecteurs 6 longitudinaux ainsi que deux parois transversales 7 munies d'encoches dans lesquelles sont positionnés des éléments chauffants 4. Deux grilles 14 définissent une chambre de chauffe 5 ouverte vers la partie supérieure du grille-pain.

Les grilles de serrage 14 sont articulées autour d'un point 16 et possèdent une partie courbe 12 à leur extrémité située dans la partie basse du grille-pain, cette partie courbe 12 étant orientée vers l'intérieur de la chambre. Dans cette zone se trouve également une lame ressort 10 susceptible d'être déplacée par un chariot porte pain 8 lorsque ce dernier est amené dans la partie basse du grille-pain.

Les grilles de serrage 14, à leur extrémité opposée, c'est à dire dans le haut de la chambre de chauffe, sont courbées de telle sorte à présenter un rebord 15 sensiblement perpendiculaire au plan défini par les grilles, ce rebord étant orienté vers l'extérieur de la chambre.

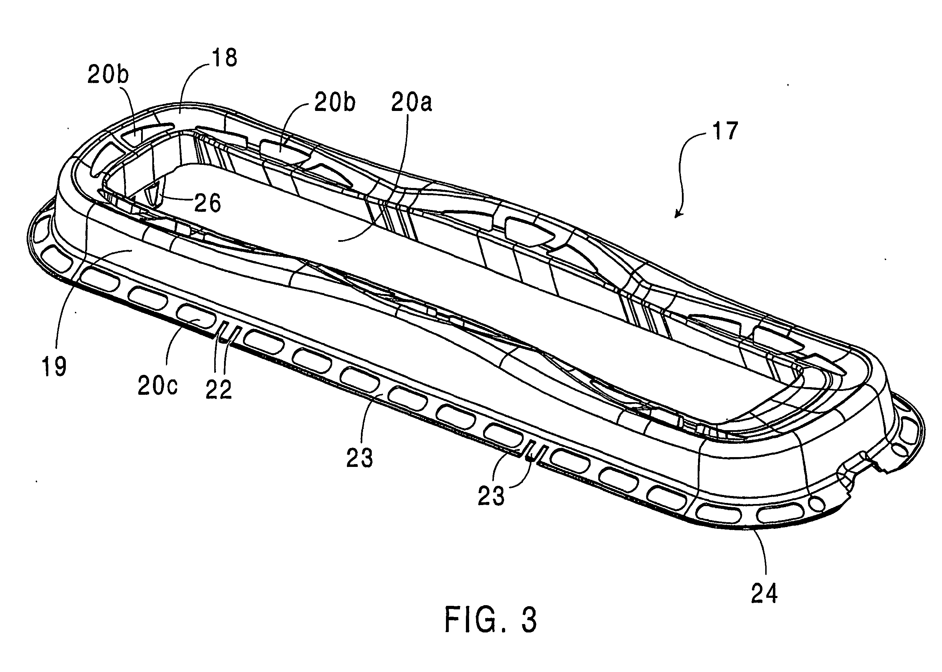

Selon un premier mode de réalisation de l'invention, un toit est agencé au niveau de l'ouverture du boîtier, dans sa partie supérieure. Ce toit comprend une tôle 17 présentant une ouverture principale 20a en correspondance avec l'ouverture de la chambre de chauffe 5, un rebord 18, ainsi qu'une paroi verticale 19. A sa base, le toit présente une collerette 24 périphérique localisée à l'intérieur du boîtier 2. Le rebord 18 est orienté vers l'ouverture de la chambre de chauffe, d'une manière périphérique à celle-ci, comme il est bien visible figure 3.

Selon l'exemple présenté, le toit repose sur le bâti 3 (non visible sur les figures).

Le rebord 18 de la tôle 17 comporte également des ouvertures 20b dont la forme, les dimensions et la répartition peuvent varier selon l'agencement des éléments chauffants, la puissance de chauffe,...

A titre d'exemple, les ouvertures présentées ont une forme elliptique. Pour indiquer la fonction de réchauffage, ces trous peuvent également constituer des pictogrammes, par exemple en ayant une forme de croissants, afin de rappeler à l'utilisateur la présence de cette fonction sur le grille-pain, telle que représentée figure 3.

Avantageusement, le rebord 18 de cette tôle n'est pas plan et peut présenter des bossages situés entre les ouvertures, et/ou une déclivité selon la largeur du rebord. D'autres configurations peuvent être envisagées sans sortir du cadre de la présente invention, le principe étant de présenter des zones d'appui du pain surélevées par rapport au boîtier 2 et, avantageusement, par rapport aux ouvertures 20b.

Selon l'invention, la collerette périphérique inférieure 24 est reliée à la tôle 17 par des ponts de matière 23, comme il est bien visible figure 3, ces ponts limitant le transfert thermique par conduction depuis le centre du toit. La collerette 24 est ainsi évidée d'au moins 50% de sa matière par la réalisation des ouvertures 20c et/ou échancrures 22. La répartition et la dimension des ponts de matière résulte d'un compromis entre la tenue mécanique de la collerette et le transfert par conduction de la chaleur générée au niveau de la tôle 17, ainsi que l'échauffement propre de la collerette 24 par convection.

Des mesures de températures ont montré, dans un toaster double fente, que pour une température de 260°C au centre du toit de réchauffage, la présente invention permet de faire chuter cette température à des valeurs inférieures à 120°C en périphérie du toit posé sur le boîtier, par les ponts de matière réalisés.

Les températures présentes sur le toit dépendent notamment du type de grille-pain utilisé, de la puissance de chauffe, de la forme de la collerette et des ponts de matière, de la disposition de la collerette par rapport au boîtier, ainsi que des matériaux utilisés pour la réalisation du toit, la présente invention n'étant pas limitée aux seuls matériaux métalliques.

Il est espéré un gain d'environ 50°C entre la température mesurée avant les ponts de matière et celle mesurée après lesdits ponts. Cette baisse de température permet donc d'élargir la gamme des matériaux possibles pour la réalisation du boîtier du grille-pain.

Selon le premier mode de réalisation présenté figure 1, une distance e sépare le toit du boîtier 2 du grille-pain, d'une manière connue en soit. Cependant, par la diminution notable de la température en périphérie du toit, le boîtier peut être réalisé en plastique sans utiliser d'espaceur pour le maintenir à distance du toit. Le plastique utilisé doit cependant présenter une bonne tenue en température, afin que le contact entre le boîtier et le toit pendant un bref instant ne le détériore pas. Toutefois, la gamme de température présentée par la périphérie du toit permet de réduire sensiblement la qualité du plastique utilisé.

Selon un second mode de réalisation, présenté figure 2, le toit est rapproché du boîtier 2' jusqu'à présenter uniquement un jeu fonctionnel avec les parois dudit boîtier. Cette conception permet de rigidifier le boîtier, permettant, dans une certaine mesure, de diminuer l'épaisseur du boîtier, d'où un gain de matière.

Dans un souci de simplification du montage du grille-pain et pour diminuer le nombre de pièces du grille-pain, la tôle 17 est solidaire du bâti 3. Selon une variante avantageuse, la tôle 17 est une extension du bâti 3.

En fonctionnement, les parties supérieures des grilles se rapprochent l'une de l'autre en serrant le pain, actionnées par le chariot porte pain 8. Ce dernier est maintenu par des moyens connus de type mécanique ou électromécanique dans la partie basse du grille-pain pendant le temps de grillage programmé ou jusqu'au degré de grillage du pain désiré où les éléments chauffants cessent d'être alimentés électriquement. Un mécanisme permet alors de remonter le chariot porte pain vers une position de déchargement du pain. Les grilles retrouvent alors leur position d'origine. Ceci constitue un fonctionnement classique du grille-pain.

Afin de limiter davantage l'élévation de la température du boîtier, notamment par rayonnement et convection, il peut être prévu un recouvrement entre la paroi verticale 19 de la tôle 17 et une extension du réflecteur 6, constituant ainsi une double paroi de protection du boîtier.

Dans son utilisation en réchauffeur de petits pains et aliments analogues, le principe reste similaire à celui d'une opération de grillage, mis à part la disposition du pain, localisé sur la tôle 17 et non sur le chariot porte pain. Par le même principe que précédemment expliqué, les grilles 14 se referment l'une vers l'autre sous l'action du déplacement du chariot porte pain 8. Sous l'effet de l'alimentation des éléments chauffants 4, de l'air chaud ascendant monte dans le grille-pain, par convection. La forme des réflecteurs 6, ainsi que celle des rebords 15 des grilles 14 permet de limiter le flux de chaleur central en freinant la convection et en orientant latéralement une partie dudit flux.

Par ailleurs, la partie supérieure des réflecteurs 6 est également étudiée pour, non seulement garder la chaleur à l'intérieur du grille-pain, mais également pour orienter celle-ci vers les ouvertures 20b du rebord 18 de la tôle 17 dans le mode réchauffage.

Selon les exemples présentés, la collerette 24 est inclinée d'un angle α par rapport à l'horizontale. Par cette disposition, la chaleur montant dans le grille-pain à l'extérieur de la chambre de chauffe, émise par la face arrière du réflecteur 6, est orientée vers les trous 20b en agissant tel un réflecteur. Cet effet participe à la diminution de la température de la collerette.

Une bonne efficacité de cette configuration est obtenue pour un angle α au moins égal à 30°.

Selon un mode de réalisation de l'invention, la puissance n'est pas modifiée, que l'on soit en mode grillage ou en mode réchauffage, évitant ainsi une commande spéciale pour la fonction réchauffage, ou un circuit électrique d'alimentation des éléments chauffants différent.

Selon une variante de réalisation de l'invention, il peut être prévu de diminuer la puissance, lorsque l'utilisateur désire réchauffer de petits pains. A cet effet, plusieurs solutions techniques sont possibles, par exemple un pont diviseur de tension permettant d'abaisser la tension d'alimentation des éléments chauffants, ou un cyclage alternant des périodes d'alimentation et d'arrêt des éléments chauffants.

Selon cette réalisation, il est nécessaire de disposer d'un bouton sélecteur permettant d'activer cette fonction de diminution de la puissance. Ceci peut être réalisé à l'aide du bouton de réglage de la temporisation, diminuant ainsi les interfaces avec l'utilisateur.

La présente invention n'est pas limitée aux exemples proposés et peut notamment être appliquée aux grille-pain possédant plus d'une chambre de chauffe.

De plus, en diminuant suffisamment la température périphérique, par la réduction des ponts de matière, le toit peut être fixé directement sur le boîtier, sans espace ni espaceurs entre ces deux pièces, et sans risque d'endommagement du boîtier.

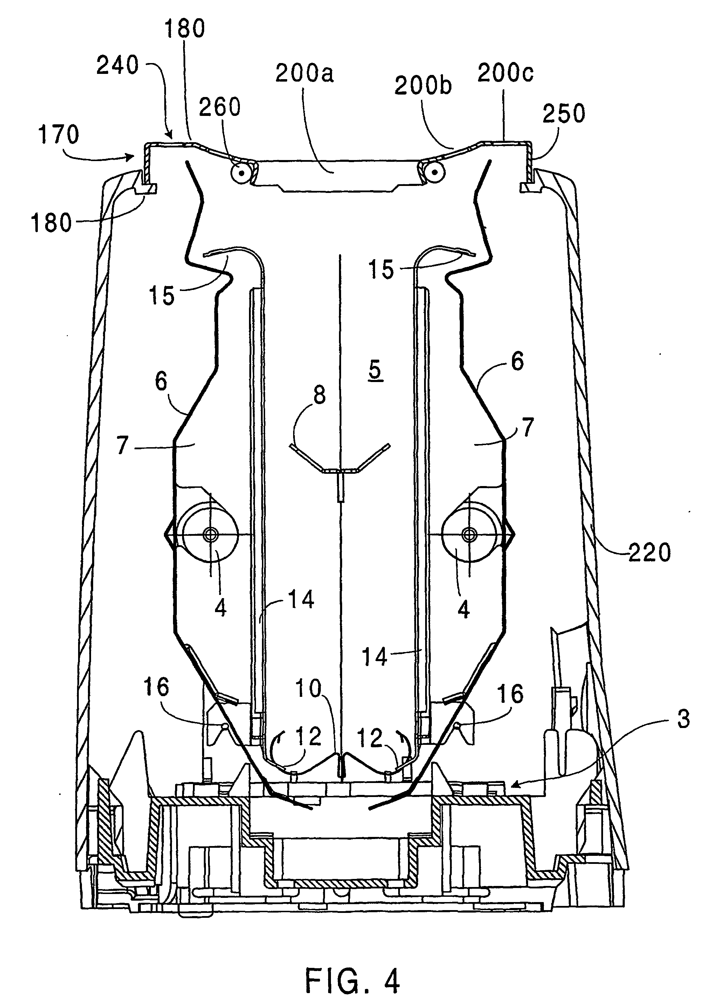

La figure 4 présente une telle configuration, le toit étant constitué d'une tôle 170 en appui sur un rebord horizontal 180 ménagé intérieurement dans le boîtier du grille-pain. La tôle 170 possède un rebord supérieur 180 muni d'ouvertures 200a, 200b et 200c ayant sensiblement les mêmes fonctions et les mêmes propriétés que respectivement les ouvertures 20a, 20b, 20c précédemment décrites, conférant à ladite collerette, par la réduction des ponts de matière ainsi générés, sensiblement les mêmes caractéristiques de frein thermique telles que précédemment évoqué.

En plus des fonctions déjà décrites, la collerette 240 sert donc également d'embase du toit par sa partie 250 de liaison avec les parois du boîtier 220 du grille-pain.

Cette configuration, où la collerette joue le rôle d'embase du toit, permet, en plus d'éviter l'introduction de miettes de pain hors de la chambre de chauffe, de rigidifier le boîtier du grille-pain par la coopération entre la partie 250 de la collerette et les parois du boîtier 220 du grille-pain.

Un tel toit peut comporter des bossages permettant une meilleure circulation d'air, tel que précédemment décrit.

Une variante additionnelle, selon l'une quelconque des configurations envisagées, est relative à un moyen de chauffage additionnel du toit, dépendant ou indépendant des moyens de chauffe de la chambre (ou des chambres) de chauffe. De tels moyens de chauffe peuvent être constitués, par exemple, d'éléments chauffants de type blindés 260 de faible puissance, tels que présentés figure 4. Ces éléments sont rapportés, dans cet exemple, directement sous le toit.

D'autres moyens de chauffage peuvent être envisagés sans sortir du cadre de la présente invention, tels un élément résistif déposé par sérigraphie, une couche d'oxyde conductrice, ...

Par ailleurs, l'invention n'est pas limitée à une collerette continue. En effet, dans un souci d'économie, une collerette discontinue peut être envisagée sans sortir du cadre de la présente invention, la collerette étant présente en périphérie du toit en des endroits nécessaires, notamment pour assurer la tenue mécanique des parois du boîtier du grille-pain.

## Revendications

1. Grille-pain (1) comportant un bâti (3) agencé dans un boîtier (2, 2', 220), au moins une chambre de grillage (5) verticale ouverte dans la partie supérieure du boîtier (2, 2', 220), des moyens de chauffe (4) situés à proximité de la chambre de grillage (5), un toit constitué d'une tôle (17, 170) périphérique à l'ouverture de la chambre de grillage (5) et possédant un rebord supérieur (18), ledit toit comportant également une collerette (24, 240) en périphérie, **caractérisé en ce que** la collerette (24, 240) est maintenue à la tôle (17, 170) par des ponts de matière (23).

2. Grille-pain selon la revendication 1, **caractérisé en ce que** la collerette (24, 240) du toit est évidée d'au moins 50% de sa matière par la réalisation des ouvertures (20c, 200c) et/ou échancrures (22).

3. Grille-pain selon l'une des revendications précédentes, **caractérisé en ce que** la collerette périphérique (24, 240) du toit est en contact avec le boîtier (2, 2', 220) du grille-pain.

4. Grille-pain selon l'une des revendications précédentes, **caractérisé en ce que** la collerette périphérique (24) du toit est inclinée d'un angle α par rapport à l'horizontale, cet angle étant au moins égal à 30°.

5. Grille-pain selon l'une des revendications précédentes, **caractérisé en ce que** la collerette périphérique inférieure (24) du toit est localisée à l'intérieur du boîtier (2, 2') du grille-pain (1).

6. Grille-pain selon l'une des revendications 1 à 4, **caractérisé en ce que** la collerette périphérique inférieure (240) du toit est posée sur le boîtier (220) du grille-pain (1).

7. Grille-pain selon l'une des revendications précédentes, **caractérisé en ce qu'**au moins une partie du rebord de la tôle (17, 170) du toit est surélevée par rapport à la partie supérieure du boîtier (2, 2', 220).

8. Grille-pain selon la revendication précédente, **caractérisé en ce que** le rebord supérieur (18, 180) du toit est muni d'ouvertures (20a, 20b, 200a, 200b, 200c).

9. Grille-pain selon l'une des revendications 7 ou 8, **caractérisé en ce que** le rebord (18, 180) de la tôle (17, 170) possède des bossages, de telle sorte à présenter des points d'appui à différentes hauteurs.

10. Grille-pain selon l'une des revendications 8 ou 9, **caractérisé en ce que** les ouvertures (20a, 20b, 200a, 200b, 200c) dans le rebord de la tôle (17, 170) sont localisées au niveau des zones de positionnement du pain.

11. Grille-pain selon l'une des revendications 7 à 10, **caractérisé en ce que** le rebord (18, 180) de la tôle (17, 170) présente une déclivité vers l'ouverture de la chambre de chauffe (5).

12. Grille-pain selon l'une des revendications précédentes, **caractérisé en ce que** la tôle (17, 170) est solidaire du boîtier (2, 2', 220) du grille-pain (1).

## Patentansprüche

1. Toaster (1), aufweisend ein Gestell (3), das in einem Gehäuse (2, 2', 220) angeordnet ist, mindestens eine vertikale Röstkammer (5), die im oberen Abschnitt des Gehäuses (2, 2', 220) geöffnet ist, Heizmittel (4), die sich in der Nähe der Röstkammer (5) befinden, eine Abdeckung, die aus einem an der Öffnung der Röstkammer (5) umlaufenden Blech (17, 170) besteht, das einen oberen Rand (18) besitzt, wobei die Abdeckung am Umfang ebenfalls einen Kragen (24, 240) aufweist, **dadurch gekennzeichnet, dass** der Kragen (24, 240) durch Materialbrücken (23) am Blech (17, 170) gehalten ist.

2. Toaster nach Anspruch 1, **dadurch gekennzeichnet, dass** mindestens 50% des Materials des Kragens (24, 240) der Abdeckung durch die Realisierung von Öffnungen (20c, 200c) und/oder Ausschnitten (22) ausgespart sind.

3. Toaster nach einem der vorhergehenden Ansprüche, **dadurch gekennzeichnet, dass** der umlaufende Kragen (24, 240) der Abdeckung mit dem Gehäuse (2, 2', 220) des Toasters in Berührung ist.

4. Toaster nach einem der vorhergehenden Ansprüche, **dadurch gekennzeichnet, dass** der umlaufende Kragen (24) der Abdeckung in einem Winkel α bezüglich der Horizontalen geneigt ist, wobei dieser Winkel mindestens 30° beträgt.

5. Toaster nach einem der vorhergehenden Ansprüche, **dadurch gekennzeichnet, dass** sich der untere umlaufende Kragen (24) der Abdeckung im Gehäuse (2, 2') des Toasters (1) befindet.

6. Toaster nach einem der Ansprüche 1 bis 4, **dadurch gekennzeichnet, dass** der untere umlaufende Kragen (240) der Abdeckung auf dem Gehäuse (220) des Toasters (1) liegt.

7. Toaster nach einem der vorhergehenden Ansprüche, **dadurch gekennzeichnet, dass** mindestens ein Teil des Randes des Blechs (17, 170) der Abdeckung bezüglich des oberen Abschnitts des Gehäuses (2, 2', 220) überhöht ist.

8. Toaster nach dem vorhergehenden Anspruch, **dadurch gekennzeichnet, dass** der oberen Rand (18, 180) der Abdeckung mit Öffnungen (20a, 20b, 200a, 200b, 200c) versehen ist.

9. Toaster nach Anspruch 7 oder 8, **dadurch gekennzeichnet, dass** der Rand (18, 180) des Blechs (17, 170) Erhebungen besitzt, so dass er in unterschiedlichen Höhen Stützstellen aufweist.

10. Toaster nach Anspruch 8 oder 9, **dadurch gekennzeichnet, dass** sich die Öffnungen (20a, 20b, 200a, 200b, 200c) im Rand des Blechs (17,170) auf Höhe der Einsetzbereiche des Brots befinden.

11. Toaster nach einem der Ansprüche 7 bis 10, **dadurch gekennzeichnet, dass** der Rand (18, 180) des Blechs (17, 170) eine Abschrägung zur Öffnung der Heizkammer (5) aufweist.

12. Toaster nach einem der vorhergehenden Ansprüche, **dadurch gekennzeichnet, dass** das Blech (17, 170) fest mit dem Gehäuse (2, 2', 220) des Toasters (1) verbunden ist.

## Claims

1. A toaster (1) comprising a frame (3) arranged in a case (2, 2', 220), at least one vertical toaster chamber (5) opening into the top portion of the case (2, 2', 220), heater means (4) situated close to the toaster chamber (5), and a top made of sheet metal (17, 170) disposed peripherally at the opening of the toaster chamber (5) and possessing a top rim (18), said top also including a peripheral collar (24, 240), the toaster being **characterized in that** the collar (24, 240) is secured to the sheet metal (17, 170) by bridges of material (23).

2. A toaster according to claim 1, **characterized in that** the collar (24, 240) of the top has at least 50% of its material removed in order to make openings (20c, 200c) and/or notches (22).

3. A toaster according to any preceding claim, **characterized in that** the peripheral collar (24, 240) of the top is in contact with the case (2, 2', 220) of the toaster.

4. A toaster according to any preceding claim, **characterized in that** the peripheral collar (24) of the top is inclined at an angle a relative to the horizontal, said angle being not less than 30°.

5. A toaster according to any preceding claim, **characterized in that** the bottom peripheral collar (24) of the top is located inside the case (2, 2') of the toaster (1).

6. A toaster according to any one of claims 1 to 4, **characterized in that** the bottom peripheral collar (240) of the top is placed on the case (220) of the toaster (1).

7. A toaster according to any preceding claim, **characterized in that** at least a portion of the rim of the sheet metal (17, 170) of the top is raised relative to the top portion of the case (2, 2', 220).

8. A toaster according to the preceding claim, **characterized in that** the top rim (18, 180) of the top is provided with openings (20a, 20b, 200a, 200b, 200c).

9. A toaster according to claim 7 or claim 8, **characterized in that** the rim (18, 180) of the sheet metal (17, 170) possesses projections, so as to present support points at different heights.

10. A toaster according to claim 8 or claim 9, **characterized in that** the openings (20a, 20b, 200a, 200b, 200c) in the rim of the sheet metal (17, 170) are located in bread-positioning zones.

11. A toaster according to any one of claims 7 to 10, **characterized in that** the rim (18, 180) of sheet metal (17, 170) presents a depression towards the opening of the heater chamber (5).

12. A toaster according to any preceding claim, **characterized in that** the sheet metal (17, 170) is secured to the case (2, 2', 200) of the toaster (1).
